# EUROPEAN PATENT APPLICATION

(11) **EP 4 826 355 A1**
(43) Date of publication of application: **21.10.2026**
(21) Application number: 25170600.8
(22) Date of filing: 15.04.2025
(51) Int. Cl.: G01N 15/08, B01L 3/00

(54) **MULTIFUNCTIONAL SAMPLE CHAMBER MODULE FOR PORE SIZE ANALYSIS AND DETECTION FROM A CAPILLARY FLOW METHOD AND APPLICATION METHOD THEREOF**

(71) Applicant: Poretech Instrument Inc., New Taipei City 248 (TW)
(72) Inventor: KU, LI-WEI, 248 New Taipei City (TW)
(74) Representative: Cabinet Chaillot

(57) **Abstract**

The present invention provides a multifunctional sample chamber module (100) for pore size analysis and detection from a capillary flow method, which mainly includes a base (1), a top cover (2) and a sealing element (3), wherein the top cover (2) and the base (1) are connected by threads to form a sample chamber between the top cover (2) and the base (1) to accommodate the sealing element (3). A concave slot (15) and a positioning protrusion (35) are arranged between the base (1) and the sealing element (3), so as to test the general sheet shaped or bulk samples. The overall effective design enables the present invention to have the practical characteristics of accurate positioning, an adjustable size and a replacement of multifunctional components when used, so that various analysis and detection are more convenient.

## Description

### Field of the Invention

The present invention relates to the technical field of sample clamp in detecting equipment, and more particularly to a multifunctional sample chamber module for pore size analysis and detection from a capillary flow method.

### Background of the Invention

With the development of society, the demand for porous materials has gradually increased, and the porous materials are widely used in many industries such as biotechnology, household, health care, filtration, papermaking and energy. However, because such tubular porous materials are porous microporous structures, they will be affected by compressive stress when used. Therefore, it is of great significance to measure the pore volume, the pore size and the pore size distribution of the porous materials under high compressive stress.

The pore size analyzer for a capillary flow method (also known as Capillary Flow Porometer) is an instrument specifically used to measure the pore size of porous materials. It is mainly used in liquid or gas filtration to evaluate the filtration efficiency of porous materials. The working principle of this instrument is based on capillary phenomenon. It adopts a circular cross-section/cylindrical pore (or capillary) to simulate the pores of the porous material. When the liquid or gas passes through the pore, we can measure the pressure difference and flow rate, and then according to the Washburn calculation formula, the pore size and pore size distribution can be calculated through the relationship between pressure and flow rate.

The pore size analyzer for a capillary flow method can be used to measure the pore size and the distribution of porous materials. The instrument can not only be used to detect various porous materials, but also can also be used to detect porous membranes, paper, films, hollow fibers, porous ceramics, sintered metals, etc. **In** general, multiple indicators such as pressure difference, filtration efficiency, and the fluid flow rate of the material is required to be tested in one test cycle.

However, the early traditional sample clamp (or sealing block) did not have a good positioning design between the clamp and the base, so when the upper cover of the sample clamp and the base are locked, causing the built-in sample clamp to rotate easily with the slot cover, which causes the built-in sample to be twisted and damaged and affect the test results. Although the more advanced design has positioners between the sample clamp and the base, the main structure is that a plurality of protruding columns(Accessories or items similar to pins and related objects.) are provided on the inner bottom surface of the base, and a corresponding number of positioning hole is provided under the sample clamp. Both of them are fixed by docking, but its structural design has shortcomings. Sometimes the improper insertion angle of the sample clamp may deform the protruding columns, which causes them to be stuck with each other, making the sample clamp difficult to be removed.

Furthermore, the upper cover and the base of the sample chamber in the prior art are both fixed single structure. The product does not have a multiple component replacement function, and can only be provided for single testing, and cannot be replaced by multiple combinations to adapt more tests of different working environments. In addition, the height dimensions of the upper cover and the base combination of the sample chamber in the prior art are also fixed, so the thickness of the sample that can be measured is greatly limited. When the sample is long or thick, the sample must be cut before testing, but once the sample is cut, its integrity will be damaged and cannot be recycled, resulting in waste and not meeting economic and environmental requirements. In short, the overall design of the sample clamp in the prior art is still imperfect, so it is necessary for further improvements.

### SUMMARY OF THE INVENTION

In view of this, one of the purposes of the present invention is to provide a multifunctional sample chamber module for pore size analysis and detection from a capillary flow method, mainly includes a base, a top cover and a sealing element. A discharge hole is configured under the base, and an external thread is configured on an upper port of the base. An injection hole is configured on an upper side of the top cover, and an internal thread is configured on a lower port of the top cover, such that a sample chamber is formed in between when the top cover connects with the base.

The sealing element is cylindrical and placed inside the base, a center through hole is configured on the sealing element, and an upper end and a lower end of the center through hole are aligned with and communicated with the injection hole and the discharge hole.

Wherein the multifunctional sample chamber module is characterized in that, a concave slot is at least configured on an inner side wall of the base along an axial direction, and a positioning protrusion opposite to the concave slot is configured on an outer side wall of the sealing element, such that the sealing element is aligned with and placed inside the base, which is fixed without rotating and shifting, and without damaging samples when testing.

An object of the present invention is therefore a multifunctional sample chamber module for pore size analysis and detection from a capillary flow method, characterized in that comprises:
a base, wherein a discharge hole is configured under the base, and an external thread is configured on an upper port of the base;
a top cover, wherein an injection hole is configured on an upper side of the top cover, and an internal thread is configured on a lower port of the top cover, such that a sample chamber is formed in between when the top cover connects with the base;
a sealing element, wherein the sealing element is cylindrical and placed inside the base, a center through hole is configured on the sealing element, and an upper end and a lower end of the center through hole are aligned with and communicated with the injection hole and the discharge hole;
wherein the multifunctional sample chamber module is characterized in that, a concave slot is at least configured on an inner side wall of the base along an axial direction, and
a positioning protrusion opposite to the concave slot is configured on an outer side wall of the sealing element, such that the sealing element is aligned with and placed inside the base, which is fixed without rotating and shifting, and without damaging samples when testing.

Another object of the invention is an application method of a multifunctional sample chamber module for pore size analysis and detection from a capillary flow method, characterized in that comprises:
constructing the multifunctional sample chamber module for pore size analysis and detection form capillary flow method, wherein a base, a top cover and a sealing element are configured, a tubular discharge hole at a bottom of the base is configured with an external thread, an upper port of the base is configured with an external thread, an injection hole is configured on an upper side of the top cover, an internal thread is configured on a lower port of the top cover, a sample chamber is formed in between when the top cover connects with the base, the sealing element is cylindrical and placed inside the base, a center through hole is configured on the sealing clamp, and an upper end and an lower end of the center through hole are aligned with and communicated with the injection hole and the discharge hole;
configuring an extending cylinder, wherein ports at both ends of the extending cylinder are respectively configured with an internal thread and an external thread, one end of the extending cylinder is extended and connected to the base to increase a height of a test chamber, and the other end of the extending cylinder is configured for the top cover to connect and close;
configuring a test module, wherein an inlet of the test module is configured with an internal thread for flexibly assemble with the discharge hole of the base, an outlet of the test module is configured with an internal thread, and a connecting hole is configured on a middle of a side of the test module to communicate with an internal channel;
configuring a downstream sensing cylinder, an injecting hole is configured on an upper side of the downstream sensing cylinder, an internal thread is configured on a lower port of the downstream sensing cylinder, a sealing cover and a sealing gasket are configured on an upper port of the downstream sensing cylinder for strengthening locking, and a plurality of locking holes are configured at intervals on a diameter frame of the upper port of the downstream sensing cylinder, a plurality of screw holes corresponding to the locking holes are configured at intervals on an surface of the sealing cover to lock with a plurality of bolts, so as to tightly lock the sealing cover and
the upper port, making the sealing cover to cover the upper port, an application method of a multifunctional replacement is performed as follows:
   S101, performing a basic testing application, in which the base, the top cover, and the sealing element are configured, wherein the pore size analysis and detection from the capillary flow method is performed with respect to general sheet shaped or bulk samples;
   S102, performing an extending test application, which the base, the top cover, the sealing element and the extending cylinder are configured, wherein the pore size analysis and detection from the capillary flow method is performed with respect to generally thicker or taller samples;
   S103, performing a negative pressure test application, which the base, the top cover, the sealing element, the test module and the downstream sensing cylinder are configured, wherein the pore size analysis and detection from the capillary flow method is performed with respect to general samples under the conditions of a negative pressure and with a slight pressure difference.

In some embodiments, the multifunctional sample chamber module further includes an extending cylinder, ports at both ends of the extending cylinder are respectively configured with an internal thread and an external thread, one end of the extending cylinder is extended and connected to the base to increase a height of a test chamber, and the other end of the extending cylinder is configured for the top cover to connect and close.

In some embodiments, a short fitting is further configured with the discharge hole of the base, the short fitting is configured with an external thread to further flexibly assemble with a test module, an inlet of the test module is configured with an internal thread, an outlet of the test module is configured with an internal thread, and a connecting hole is configured on a middle of a tube side of the test module and communicated with an inner channel of the test module.

In some embodiments, a downstream sensing cylinder is further configured, an injecting hole is configured on a upper side of the downstream sensing cylinder, an internal thread is configured on a lower port of the downstream sensing cylinder, a sealing cover and a sealing gasket are configured at an upper port of the downstream sensing cylinder for strengthening locking, and a plurality of locking holes are disposed at intervals on a diameter frame of the upper port of the downstream sensing cylinder, a plurality of screw holes corresponding to the locking holes are configured at intervals on an upper surface of the sealing cover to lock with a plurality of bolts, so as to tightly lock the sealing cover and the upper port, making the sealing cover to cover the upper port.

Compared with the prior art, the advantage of the present invention and application method lies in that, when applying the multifunctional sample chamber module with the overall effective design of the present invention, the multifunctional sample chamber module has the practical features of accurate positioning, an adjustable size and the replaceable multi-functional components that overcome the shortcomings of traditional sample clamps. The multi-functional combination replacement technology can meet the experimental needs in different application scenarios, making various analysis and detection more convenient, achieving accurate measurement and evaluation of the pore structure of the porous material, and ensuring the accuracy and reliability of the test results.

### BRIEF DESCRIPTION OF THE DRAWINGS

FIG. 1 is an exploded three-dimensional view of an embodiment of the multifunctional sample chamber module of the present invention.
FIG. 2 is a combined sectional view of an embodiment of the multifunctional sample chamber module of the present invention.
FIG. 3 is an exploded three-dimensional view of the multifunctional sample chamber module equipped with an extending cylinder of the present invention.
FIG. 4 is a combined cross-sectional view of the multifunctional sample chamber module equipped with an extending cylinder of the present invention.
FIG. 5 is a three-dimensional exploded view of the multifunctional sample chamber module equipped with a downstream sensing cylinder of the present invention.
FIG. 6 is a combined cross-sectional view of the multifunctional sample chamber module equipped with a downstream sensing cylinder of the present invention.
FIG. 7 is an application example of the multifunctional sample chamber module of the present invention.
FIG. 8 is a flow chart of the application method of the multifunctional sample chamber module of the present invention.

### DETAIL DESCRIPTION

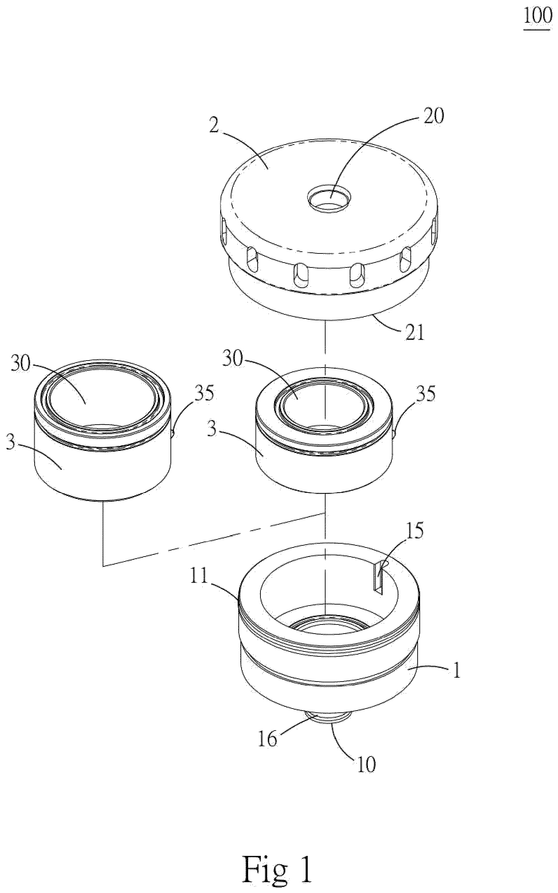

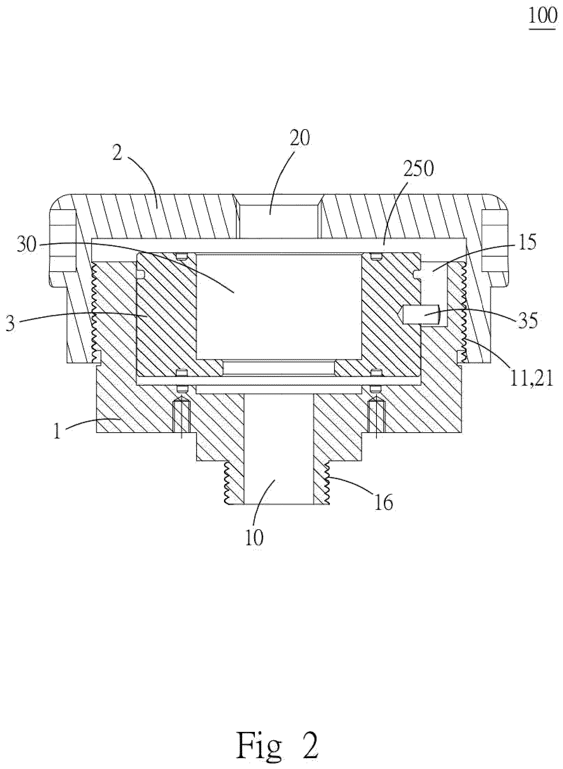

To facilitate understanding of the content of the present invention and the effects that can be achieved, specific embodiments are listed with reference to the drawings and described in detail as follows. As a non-limiting embodiment, as shown in FIG. 1 and FIG. 2, the present invention provides a multifunctional sample chamber module 100 for pore size analysis and detection from a capillary flow method, which mainly includes a base 1, a top cover 2 and a sealing element 3.

A discharge hole 10 is configured under the base 1, and an external thread is configured on an upper port 11 of the base 1.

A injection hole 20 is configured on an upper side of the top cover 2, and an internal thread is configured on a lower port 21 of the top cover 2, such that a sample chamber 250 is formed in between when the top cover 2 connects with the base 1.

The sealing element 3 is cylindrical and placed inside the base 1. A center through hole 30 is configured on the sealing element 3, and an upper end and a lower end of the center through hole 30 are aligned with and communicated with the injection hole 20 and the discharge hole 10.

Wherein, a concave slot 15 is at least configured on an inner side wall of the base 1 along an axial direction, and a positioning protrusion 35 opposite to the concave slot 15 is configured on an outer side wall of the sealing element 3, such that the sealing element 3 may easily be aligned with and placed in the base 1, which may be fixed without rotating and shifting, and the samples may not be damaged when testing.

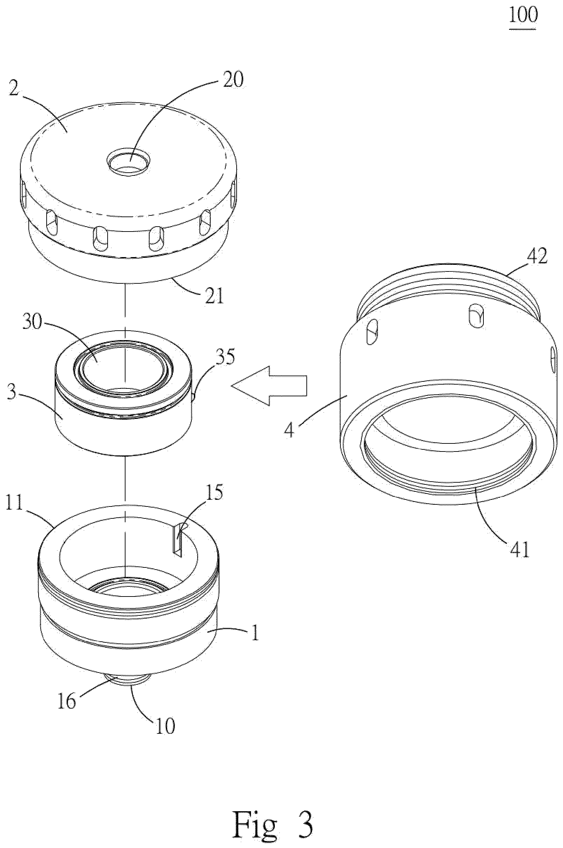

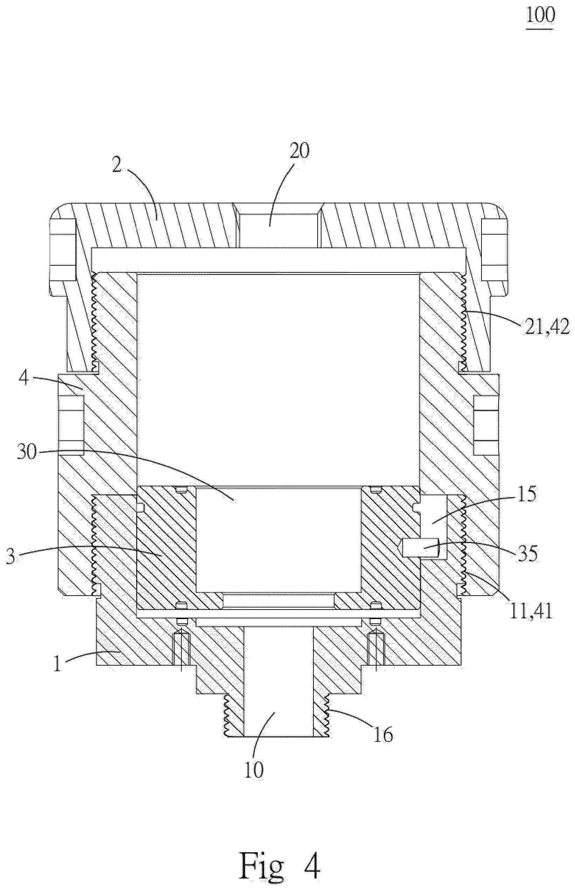

As another non-limiting embodiment, as shown in FIG. 3 to FIG. 4, the present invention is further configured with an extending cylinder 4, and the ports 41, 42 at both ends of the extending cylinder 4 are respectively configured with an internal thread and an external thread. One end of the extending cylinder 4 is extended and connected to the base 1 to increase the height of a test chamber, and the other end of the extending cylinder 4 is configured for the top cover 2 to connect and close.

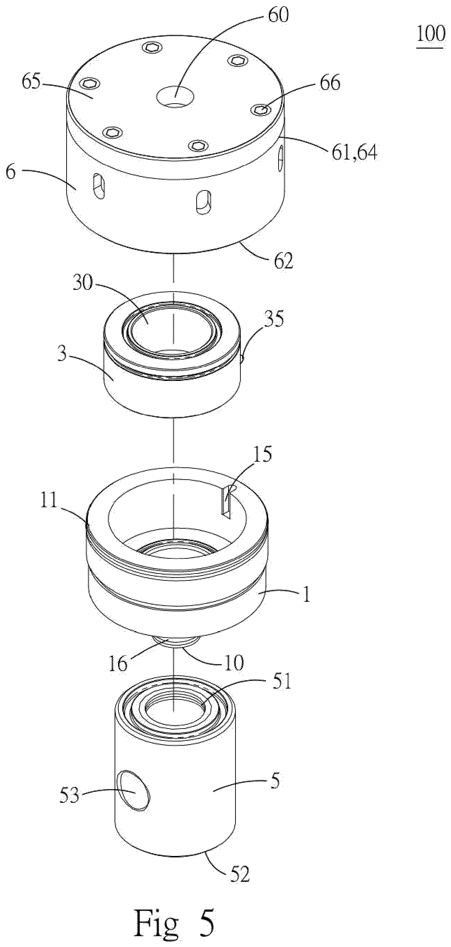

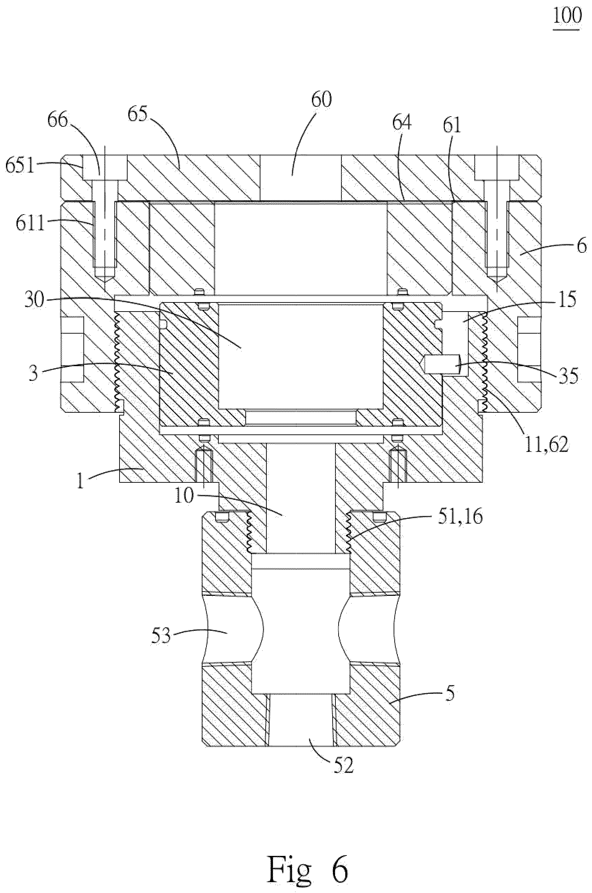

As another non-limiting embodiment, as shown in FIG. 5 and FIG. 6, wherein a short fitting 16 is further configured with the discharge hole 10 of the base 1. The short fitting 16 is configured with an external thread to further flexibly assemble with a test module 5. An inlet 51 of the test module 5 is configured with an internal thread. An outlet 52 of the test module 5 is configured with an internal thread. A connecting hole 53 is configured on the middle of a tube side, so as to communicate with an inner channel of the test module 5.

As another non-limiting embodiment, this invention further includes a downstream sensing cylinder 6. An injecting hole 60 is configured on an upper side of the downstream sensing cylinder 6. An internal thread is configured on a lower port 62 of the downstream sensing cylinder 6. A sealing cover 65 and a sealing gasket 64 are disposed at the upper port 61 of the downstream sensing cylinder 6 for strengthening the locking, and a plurality of locking holes 611 are configured at intervals on a diameter frame of the upper port 61 of the downstream sensing cylinder 6. A plurality of screw holes 651 corresponding to the locking holes 611 are configured at intervals on an upper surface of the sealing cover 65 to lock with a plurality of bolts 66, so as to tightly lock the sealing cover 65 and the upper port 61, making the sealing cover 65 cover the upper port 61.

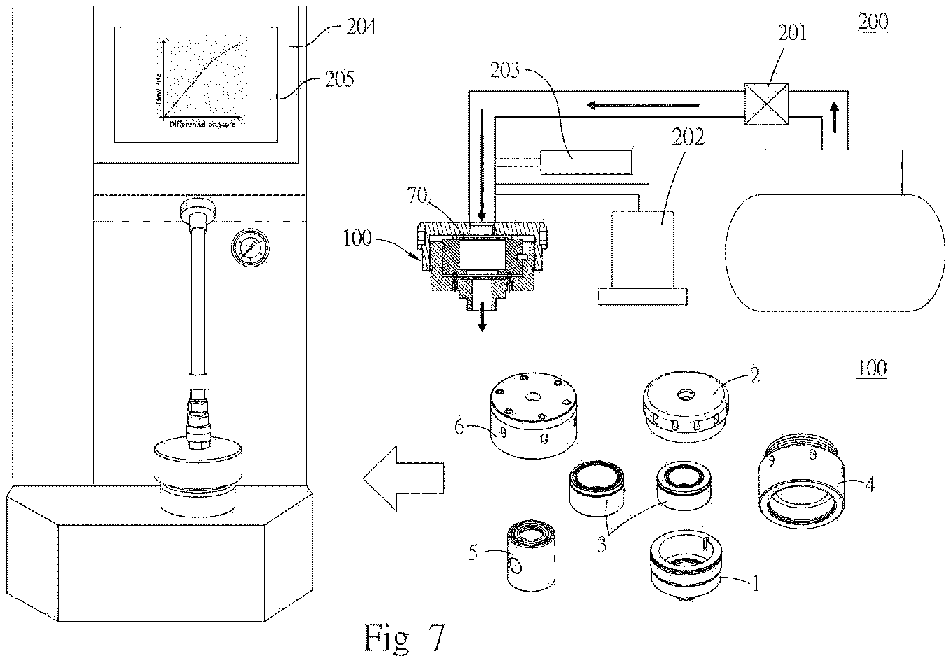

Such that, as shown in FIG. 1 and FIG. 7, the present invention can be multifunctionally combined and replaced for testing samples 70 of different thicknesses and lengths, thereby keeping the sample 70 intact and avoiding the waste and scrapping caused by cutting and damaging. In addition to the positive pressure testing, the present invention can also be used for the negative pressure testing.

More specifically, as shown in FIG. 1 to FIG. 8, the application method of the multifunctional sample chamber module 100 for pore size analysis and detection from a capillary flow method of the present invention mainly includes the following steps.

Firstly, the multifunctional sample chamber module 100 for pore size analysis and detection form capillary flow method is constructed, which is configured with a base 1, a top cover 2 and a sealing element 3. A tubular discharge hole 10 at the bottom of the base 1 is configured with an external thread, and an external thread is configured on an upper port 11 of the base 1. An injection hole 20 is configured on an upper side of the top cover 2, and an internal thread is configured on a lower port 21 of the top cover 2. A sample chamber 250 is formed in between when the top cover 2 connects with the base 1. The sealing element 3 is cylindrical and placed inside the base 1. A center through hole 30 is configured on the sealing element 3, and an upper end and a lower end of the center through hole 30 are aligned with and communicated with the injection hole 20 and the discharge hole 10. A concave slot 15 is at least configured on an inner side wall of the base 1 along an axial direction, and a positioning protrusion 35 opposite to the concave slot 15 is configured on an outer side wall of the sealing element 3, such that the sealing element 3 may easily be aligned with and placed inside the base 1, which may be fixed without rotating and shifting, and the samples may not be damaged when testing.

An extending cylinder 4 is further configured. The ports 41and 42 at both ends of the extending cylinder 4 are respectively configured with an internal thread and an external thread. One end of the extending cylinder 4 is extended and connected to the base 1 to increase the height of a test chamber, and the other end of the extending cylinder 4 is configured for the top cover 2 to connect and close.

A test module 5 is further configured. An inlet 51 of the test module 5 is configured with an internal thread for flexibly assemble with a discharge hole 10 of the base 1. An outlet 52 of the test module 5 is configured with an internal thread, and a connecting hole 53 is configured in the middle of a side of the test module 5 to communicate with an internal channel.

A downstream sensing cylinder 6 is configured. The injecting hole 60 is configured on an upper side of the downstream sensing cylinder 6. The internal thread is configured on a lower port 62 of the downstream sensing cylinder 6. A sealing cover 65 and a sealing gasket 64 are configured on an upper port 61 of the downstream sensing cylinder 6 for strengthening the locking, and a plurality of locking holes 611 are configured at intervals on a diameter frame of the upper port 61 of the downstream sensing cylinder 6. A plurality of screw holes 651 corresponding to the locking holes 611 are configured at intervals on an upper surface of the sealing cover 65 to lock with a plurality of bolts 66, so as to tightly lock the sealing cover 65 and the upper port 61, making the sealing cover 65 cover the upper port 61.

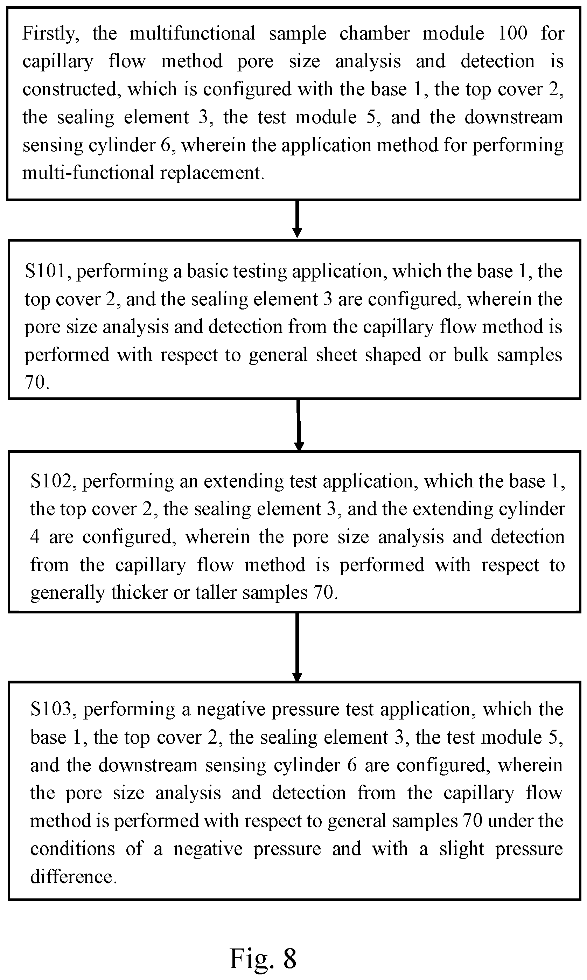

As shown in FIG. 7 and FIG. 8, the application method of the multifunctional sample chamber module 100 of the present invention that can perform the multifunctional replacement includes the following steps.

In step S101, performing a basic testing application, which the base 1, the top cover 2, and the sealing element 3 are configured, wherein the pore size analysis and detection from the capillary flow method is performed with respect to general sheet shaped or bulk samples 70.

In step S102, performing an extending test application, which the base 1, the top cover 2, the sealing element 3, and the extending cylinder 4 are configured, wherein the pore size analysis and detection from the capillary flow method is performed with respect to generally thicker or taller samples 70.

In step S103, performing a negative pressure test application, which the base 1, the top cover 2, the sealing element 3, the test module 5, and the downstream sensing cylinder 6 are configured, wherein the pore size analysis and detection from the capillary flow method is performed with respect to general samples 70 under the conditions of a negative pressure and with a slight pressure difference.

In some embodiments, as shown in FIG. 7, the multifunctional sample chamber module 100 of the present invention is mainly used in the pore size analyzer 200 from the capillary flow method, which further includes a pressure regulating valve 201, a flowmeter 202, a pressure sensor 203, a computer control system 204 and a software 205.

The pressure regulating valve 201 is used to control the gas pressure to increase slowly.

The flowmeter 202 is used to measure gas flow.

The pressure sensor 203 is used to measure pressure.

The computer control system 204 is used to control the speed of the pressure regulating valve 201 and continuously measure the pressure and gas flow.

The software 205 is used to set various analytical parameters and perform data analysis.

During application, firstly, it is necessary to place an annular sealing element (or film gasket) on the groove of the sealing element 3, then place the sample 70 on the annular sealing element, and place another annular sealing element above the sample 70. Such that, an airtight seal can be formed between the sample 70, the top cover 2 and the base 1 when testing, so as to prevent gas leakage during the testing process. Or a counterweight or piston may be added to the sealing element 3 to apply triaxial compression (not shown in the above figure) to measure and analyze the maximum pore diameter, an average pore diameter, and the pore size distribution of the sample.

**In** the testing process, the wet curve and the dry curve are used as two crucial bases for the pore size analyzer 200 from the capillary flow to evaluate the pore size of the porous materials. Wherein, the wet curve is the plotted relationship curve between pressure and flow when the gas squeezes the liquid out from the porous materials. The purpose of the wet curve measurement is to determine the pore size of the pore throat in the pore path of the porous material. The dry curve is the plotted relationship curve between pressure and flow when the gas (usually air or nitrogen) passes through the porous material. The purpose of the dry curve measurement is to calculate the average flow pore size, the minimum pore size and the gas permeability.

Compared with the prior art, the advantage of the present invention and application method lies in that, when applying the multifunctional sample chamber module 100 with the overall effective design of the present invention, the multifunctional sample chamber module 100 has the practical features of accurate positioning, an adjustable size and the replaceable multi-functional components that overcome the shortcomings of traditional sample clamps. The multi-functional combination replacement technology can meet the experimental needs in different application scenarios, making various analysis and detection more convenient, in single-axis, bi-axial, and radial directions, or various combinations of triaxial compression. The porosity test is performed when the compressive stress is applied to the sample 70 materials in a controlled manner, achieving accurate measurement and evaluation of the pore structure of the porous material, and ensuring the accuracy and reliability of the test results.

## Claims

1. A multifunctional sample chamber module (100) for pore size analysis and detection from a capillary flow method, **characterized in that** comprises:
a base (1), wherein a discharge hole (10) is configured under the base (1), and an external thread is configured on an upper port of the base (1);
a top cover (2), wherein an injection hole (20) is configured on an upper side of the top cover (2), and an internal thread is configured on a lower port of the top cover (2), such that a sample chamber is formed in between when the top cover (2) connects with the base (1);
a sealing element (3), wherein the sealing element (3) is cylindrical and placed inside the base (1), a center through hole (30) is configured on the sealing element (3), and an upper end and a lower end of the center through hole (30) are aligned with and communicated with the injection hole (20) and the discharge hole (10);
wherein the multifunctional sample chamber module (100) is **characterized in that**, a concave slot (15) is at least configured on an inner side wall of the base (1) along an axial direction, and a positioning protrusion (35) opposite to the concave slot (15) is configured on an outer side wall of the sealing element (3), such that the sealing element (3) is aligned with and placed inside the base (1), which is fixed without rotating and shifting, and without damaging samples when testing.

2. The multifunctional sample chamber module (100) for pore size analysis and detection from a capillary flow method as claimed in claim 1, wherein the multifunctional sample chamber module (100) further comprises an extending cylinder (4), ports at both ends of the extending cylinder (4) are respectively configured with an internal thread and an external thread, one end of the extending cylinder (4) is extended and connected to the base (1) to increase a height of a test chamber, and the other end of the extending cylinder (4) is configured for the top cover (2) to connect and close.

3. The multifunctional sample chamber module (100) for pore size analysis and detection from a capillary flow method as claimed in claim 1, wherein a short fitting (16) is further configured with the discharge hole (10) of the base (1), the short fitting (16) is configured with an external thread to further flexibly assemble with a test module (5), an inlet of the test module (5) is configured with an internal thread, an outlet of the test module (5) is configured with an internal thread, and a connecting hole (53) is configured on a middle of a tube side of the test module (5) and communicated with an inner channel of the test module (5).

4. The multifunctional sample chamber module (100) for pore size analysis and detection from a capillary flow method as claimed in claim 1, wherein a downstream sensing cylinder (6) is further configured, an injecting hole is configured on a upper side of the downstream sensing cylinder (6), an internal thread is configured on a lower port of the downstream sensing cylinder (6), a sealing cover (65) and a sealing gasket (64) are configured at an upper port of the downstream sensing cylinder (6) for strengthening locking, and a plurality of locking holes (611) are disposed at intervals on a diameter frame of the upper port of the downstream sensing cylinder (6), a plurality of screw holes (651) corresponding to the locking holes (611) are configured at intervals on an upper surface of the sealing cover (65) to lock with a plurality of bolts (66), so as to tightly lock the sealing cover (65) and the upper port, making the sealing cover (65) to cover the upper port.

5. An application method of a multifunctional sample chamber module (100) for pore size analysis and detection from a capillary flow method, **characterized in that** comprises:
constructing the multifunctional sample chamber module (100) for pore size analysis and detection form capillary flow method, wherein a base (1), a top cover (2) and a sealing element (3) are configured, a tubular discharge hole (10) at a bottom of the base (1) is configured with an external thread, an upper port of the base (1) is configured with an external thread, an injection hole (20) is configured on an upper side of the top cover (2), an internal thread is configured on a lower port of the top cover (2), a sample chamber is formed in between when the top cover (2) connects with the base (1), the sealing element (3) is cylindrical and placed inside the base (1), a center through hole (30) is configured on the sealing clamp, and an upper end and an lower end of the center through hole (30) are aligned with and communicated with the injection hole (20) and the discharge hole (10);
configuring an extending cylinder (4), wherein ports at both ends of the extending cylinder (4) are respectively configured with an internal thread and an external thread, one end of the extending cylinder (4) is extended and connected to the base (1) to increase a height of a test chamber, and the other end of the extending cylinder (4) is configured for the top cover (2) to connect and close;
configuring a test module (5), wherein an inlet of the test module (5) is configured with an internal thread for flexibly assemble with the discharge hole (10) of the base (1), an outlet of the test module (5) is configured with an internal thread, and a connecting hole (53) is configured on a middle of a side of the test module (5) to communicate with an internal channel;
configuring a downstream sensing cylinder (6), an injecting hole is configured on an upper side of the downstream sensing cylinder (6), an internal thread is configured on a lower port of the downstream sensing cylinder (6), a sealing cover (65) and a sealing gasket (64) are configured on an upper port of the downstream sensing cylinder (6) for strengthening locking, and a plurality of locking holes (611) are configured at intervals on a diameter frame of the upper port of the downstream sensing cylinder (6), a plurality of screw holes (651) corresponding to the locking holes (611) are configured at intervals on an surface of the sealing cover (65) to lock with a plurality of bolts (66), so as to tightly lock the sealing cover (65) and the upper port, making the sealing cover (65) to cover the upper port, an application method of a multifunctional replacement is performed as follows:
S101, performing a basic testing application, in which the base (1), the top cover (2), and the sealing element (3) are configured, wherein the pore size analysis and detection from the capillary flow method is performed with respect to general sheet shaped or bulk samples;
S102, performing an extending test application, which the base (1), the top cover (2), the sealing element (3) and the extending cylinder (4) are configured, wherein the pore size analysis and detection from the capillary flow method is performed with respect to generally thicker or taller samples;
S103, performing a negative pressure test application, which the base (1), the top cover (2), the sealing element (3), the test module (5) and the downstream sensing cylinder (6) are configured, wherein the pore size analysis and detection from the capillary flow method is performed with respect to general samples under the conditions of a negative pressure and with a slight pressure difference.

6. The application method of the multifunctional sample chamber module (100) for pore size analysis and detection from the capillary flow method as claimed in claim 5, wherein a concave slot (15) is at least configured on an inner side wall of the base (1) along an axial direction, and a positioning protrusion (35) opposite to the concave slot (15) is configured on an outer side wall of the sealing element (3), such that the sealing element (3) is aligned with and placed inside the base (1), which is fixed without rotating and shifting, and without damaging samples when testing.
